# EUROPEAN PATENT SPECIFICATION

(11) **EP 2 671 369 B1**
(45) Date of publication and mention of the grant of the patent: **04.09.2019**
(21) Application number: 11857663.6
(22) Date of filing: 08.12.2011
(51) Int. Cl.: H04L 29/12, H04L 29/08, H04L 29/06

(54) **METHOD AND APPARATUS FOR FACILITATING COMMUNICATIONS FOR BROWSER-BASED APPLICATIONS**
VERFAHREN UND VORRICHTUNG ZUR ERMÖGLICHUNG VON KOMMUNIKATIONEN FÜR BROWSER-ANWENDUNGEN
PROCÉDÉ ET APPAREIL SERVANT À FACILITER LES COMMUNICATIONS POUR LES APPLICATIONS BASÉES SUR NAVIGATEUR

(30) Priority: 31.01.2011 US 201161437908 P; 17.03.2011 US 201113050542
(43) Date of publication of application: 11.12.2013
(73) Proprietor: Nokia Technologies Oy, 02610 Espoo (FI)
(72) Inventor: KESKITALO, Tuomas Veli, FI-90460 Oulunsalo (FI); ALAKONTIOLA, Jukka Sakari, FI-90240 Oulu (FI)
(74) Representative: Swindell & Pearson Limited
(86) International application number: PCT/FI2011/051087
(87) International publication number: WO 2012/104471

(56) References cited:
- EP-A2- 1 172 726
- US-A1- 2007 282 851
- US-A1- 2009 157 727
- US-B1- 7 171 473
- US-B1- 7 171 473

## Description

### BACKGROUND

US 7171473 B1 relates to web page and an applet which runs on the web page. There is another application (CCHAT) which is not linked to a particular web page. A session manager assigns a unique session ID which the client device uses in all communications with the session manager. A client device may be set up such that the CCHAT application executes when the client device is turned on. The CCHAT application can log the client device into the system and initiate a HTTP request once the CCHAT application receives the session ID from the session manager.

Service providers and device manufacturers (e.g., wireless, cellular, etc.) are continually challenged to deliver value and convenience to consumers by, for example, providing compelling network services. One area of interest has been the development of applications (e.g., web applications developed using standard web technologies) for delivering these services and other functions through web browsers. For example, as the numbers of operating system platforms (e.g., mobile operating systems) proliferate, service providers are making increasing use of web applications as a means for cross-platform development. In many cases, such web applications are used in a mixed environment where the web applications interoperate with native applications,

Accordingly, service providers and device manufacturers face significant technical challenges to enabling communications (e.g., data exchanges) between web applications and native applications, particularly with respect to addressability of the web applications over a communication network.

### SOME EXAMPLE EMBODIMENTS

Therefore, there is a need for an approach for facilitating communications for web applications and/or their associated browser sessions.

The invention is defined by the appended claims.

According to one embodiment, a method comprises determining to associate a communication identifier with a browser session. The browser session hosts, at least in part, a web application. The communication identifier facilitates addressing of the browser session, the web application, or a combination thereof via a process that is not specific to the browser session, the web application, or a combination thereof.

According to another embodiment, an apparatus comprises at least one processor, and at least one memory including computer program code, the at least one memory and the computer program code configured to, with the at least one processor, cause, at least in part, the apparatus to determine to associate a communication identifier with a browser session. The browser session hosts, at least in part, a web application. The communication identifier facilitates addressing of the browser session, the web application, or a combination thereof via a process that is not specific to the browser session, the web application, or a combination thereof.

According to another embodiment, a computer-readable storage medium carries one or more sequences of one or more instructions which, when executed by one or more processors, cause, at least in part, an apparatus to determine to associate a communication identifier with a browser session. The browser session hosts, at least in part, a web application. The communication identifier facilitates addressing of the browser session, the web application, or a combination thereof via a process that is not specific to the browser session, the web application, or a combination thereof.

According to another embodiment, an apparatus comprises means for determining to associate a communication identifier with a browser session. The browser session hosts, at least in part, a web application. The communication identifier facilitates addressing of the browser session, the web application, or a combination thereof via a process that is not specific to the browser session, the web application, or a combination thereof.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (including derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of facilitating communications for browser-based applications, according to one embodiment;
FIG. 2 is a diagram of the components of the data communication platform and a message routing service, according to one embodiment;
FIG. 3 is a flowchart of a process for facilitating communications for browser-based applications, according to one embodiment;
FIG. 4 is a flowchart of a process for providing browser-based group communications, according to one embodiment;
FIG. 5 is a ladder diagram that illustrates a sequence of messages and processes used for facilitating browser-based group communications, according to one embodiment;
FIGS. 6A and 6B are diagrams of user interfaces used in the processes of FIGS. 3-5 for facilitating browser-based group communications including private and public data, according to various embodiments;
FIG. 7 is a diagram of hardware that can be used to implement an embodiment of the invention;
FIG. 8 is a diagram of a chip set that can be used to implement an embodiment of the invention; and
FIG. 9 is a diagram of a mobile terminal (e.g., handset) that can be used to implement an embodiment of the invention.

### DESCRIPTION OF SOME EMBODIMENTS

Examples of a method, apparatus, and computer program for facilitating communications for browser-based applications are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

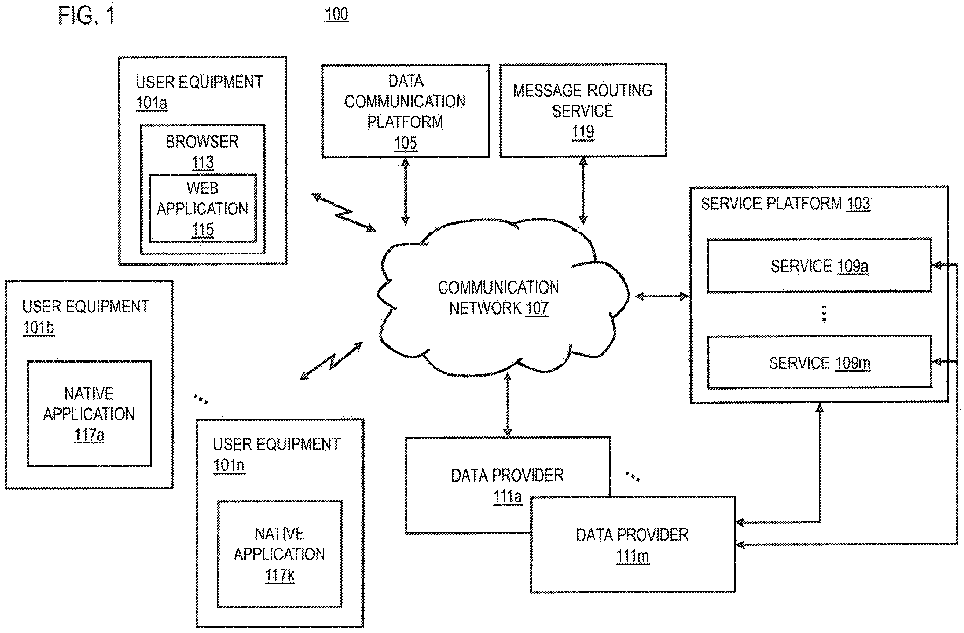

FIG. 1 is a diagram of a system capable of providing communication with a service using a recipient identifier, according to one embodiment. As discussed above, service providers are making increased use of web-based applications for providing access to various services and functions. In many cases, such services include facilitating multiparty communications (e.g., data exchanges) with servers operated by the service providers, content providers, and the like, as well as other peer nodes or devices within a network. For example, an instant messaging service may provide multiparty communications sessions via both web-based access (e.g., via a web-application) or access via a native client (e.g., an executable application running natively at a device).

However, under a traditional communication systems and networks (e.g., the Internet via, for instance, transmission control protocol/Internet Protocol (TCP/IP)), the addressing of web-applications versus native applications to support multiparty communications can differ substantially. Therefore, service providers and device manufacturers face significant technical challenges to providing functions in a web application that are equivalent to functions provided in a native application. For example, native applications are typically addressable directly via the IP address assigned to the host device because they typically use TCP/IP-based connections to the communication network. Web applications, however, typically operate within another host application (e.g., a web browser) that is in turn executed on a host device operating using a hypertext transport protocol (HTTP), Websockets, or other browser-based connection. Under this scenario, conventional security policies standards generally do not allow the web-application to access or otherwise use the IP address assigned to the mobile device or the host web application.

Instead, services providers that want to provide addressability of a browser session or the web application executing within the browser session (e.g., to provide for multipart communications) have historically had to operate application specific servers to facilitate such routing. For example, such application specific servers often maintain addressing information for communications, messages, data, etc. that are to be shared among its client web applications, native applications, and/or other devices within the specific service. Developing, operating, and maintaining application specific services to route and address messages present substantial resource burdens that can often discourage service providers and developers from offering such services.

To address this problem, a system 100 of FIG. 1 introduces the capability to facilitate communications (e.g., multiparty communications) for browser-based applications and/or sessions by identifying web applications and/or browser sessions that host those web applications with communication identifiers (IDs) that are addressable using general processes (e.g., communication processes) that are not specific to any particular web application or service. In this way, the web application and/or browser session can address other instances of the application, other applications (e.g., both web-based and native applications), other devices, etc. over a communication network (e.g., the Internet) by using the communication IDs. In one embodiment, the system 100 enables a web application identify itself with a communication ID based, at least in part, on an application ID, a user ID, and/or a random browser ID. In another embodiment, the communication ID that is based on the application ID, the user ID, and/or random browser ID can be processed by a web front end component into an externally addressable ID such as an IP address under TCP/IP. Accordingly, under this embodiment, the system 100 determines, at least in part, one or more user IDs, one or more device IDs associated with the device, one or more application IDs associated with the application, one or more browser IDs, or a combination thereof, which are used to generate the communication ID.

In another embodiment, a front end component of the system 100 can emulate a client device that has an externally addressable ID (e.g., an IP address) to represent the web application and/or browser session. In yet another embodiment, the communication ID can be an IP address; and, thus, the communication ID need not be processed into an externally addressable ID capable of being routed using general transport protocols (e.g., TCP/IP).

After the communication ID is associated with the web application and/or browser session, the system 100 may then facilitate communications between the web application or browser session and other applications, device, services, applications, etc. over the communication network using generic communication routing processes (e.g., a general message routing service or other standards-based processes (e.g., TCP/IP-based processes)). For example, the data may include messages for notification such as a status update message of another user from a social networking service, and the status update message is to be presented via an application in a device as the notification.

Because of the direct addressability of browser applications and/or sessions as discussed in the various embodiments described herein, a web application can exchange both private and public data with other components of a communication network without relying on application-specific servers to facilitate the process. As a result, the system 100 enables the web application to engage in more advanced communication roles using existing communications infrastructure. For example, a web application operating with the addressability provided by a communication as described in various embodiments can act as a "master node" to manage and communicate among a group of other nodes (e.g., not native application nodes and web application nodes) via dedicated channels. In this way, service providers can (e.g., more easily and with less resource burden) support multiparty communication services. For example, a service may provide a multiparty game that includes public information (e.g., a game board) that is, for instance, hosted in a browser session presented on a television. At the same time, individual players can join in the game session by joining in a group or communication channel hosted by a master (e.g., typically the client presenting the public information). In one embodiment, the individual players can join in via their own web applications or sessions or by executing native applications on their individual devices. Thus, the group can support both homogenous (e.g., all web applications or all native applications) or a mixed (e.g., combination of both web and native applications) modes of operation. The master web application can then address and direct private data or communications (e.g., game pieces private to each player) to the individual players.

As shown in FIG. 1, the system 100 comprises user equipment (UEs) 101a-101n having connectivity to a service platform 103 and a data communication platform 105 via a communication network 107. In one embodiment, the source of the data available for user access may be the service platform 103, the one or more services 109a-109m of the service platform 103, the one or more data providers 111a-111k, and/or other data services available over the communication network 107. For example, a service 109a may obtain data (e.g., notification messages or media content) from a data provider 111a to deliver the obtained data to at least one of the UEs 101a-101n. The service platform 103, services 109a-109m, and/or content providers 111a-111k may provide data such that the data may be sent to the UE 101 via the communication network 107. Each of the services 109a-109m, for instance, may provide different content and/or different types of services (e.g., a social networking service, a messaging service or a music service). Some of services 109a-109m may be provided with a different quality of service like guaranteed throughput based on the service level agreement between the data communication and service provider. The communication ID (e.g., assigned by the data communication platform 105) may be used to address and mediate the data among the data sources (e.g., services 109a-109m, data providers 111a-111k), the UEs 101a-101n, the browser 113 or the web application 115 executing within the UE 101a, the native applications 117a-117k executing within the UEs 101b-101n.

Although FIG. 1 shows only UE 101a executing a web application 115 and UEs 101b-101n executing the native applications 117, it is contemplated that the UEs 101a-101n can execute any combination of web applications 113 and/or native applications 117 in both homogenous and mixed modes of operation. For example, the web application 115 and native application 117 may be instant messaging clients that receive message notifications from a corresponding service 109 (e.g., instant messaging service). In various embodiments of the approach described herein, the web application 113 may request or otherwise receive a communication identifier from the data communication platform 105 for addressing and routing data (e.g., messages, notifications, etc.) that are transmitted between the service 109 to the client applications (e.g., web application 115, native applications 117).

In one embodiment, the web application 115 and/or the browser 113 may send a communication request to the data communication platform 105 to provide communication ID assignment and/or client emulation to facilitate addressability of communications from the web application 115 or the browser session 113. Although, the data communication platform 105 is shown as a separate component of the system 100, it is contemplated that the data communication platform 105 or one or more of its functions can be performed or otherwise incorporated in the service platform 103, the services 109a-109m, the data providers 111a-111m, the UEs 101a-101n, or any other component of the system 100 or communication network 107.

In one embodiment, the web application 115/browser 113 and the data communication platform 105 work in cooperation to enable the generation of communication IDs or emulation of client devices based on the communication IDs. For example, the data communication platform 105 can protect potentially sensitive identifiers (e.g., device identifiers, user identifiers, etc.) from exposure to third-party applications and/or services by requesting authentication from the web application 115. In one embodiment, the authentication may be provide using a "single sign on (SSO)" authentication system wherein one set of authentication credentials can be used to authenticate access to a group of services. Once the data communication platform 105 associates a communication ID or IDs to the web application 115, communication between the web application 115 can facilitated through generic processes (e.g., processes not specific to the service 109 or application corresponding to the web application 115).

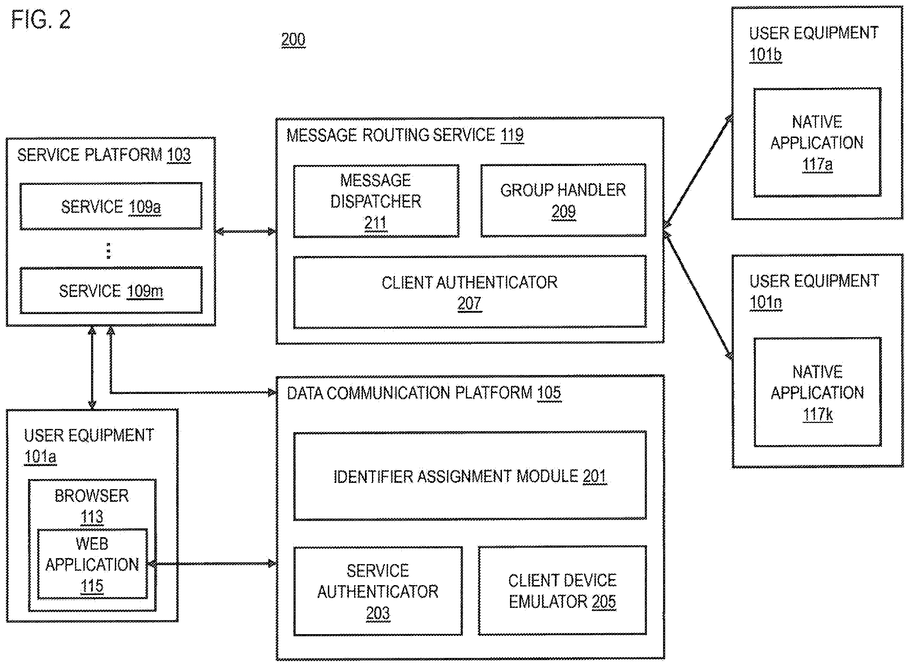

As shown FIG. 1, one generic process is the message routing service 119 which can aggregate message from multiple application and services 109 and distribute them to the appropriate clients (e.g., the web application 115, native applications 117). In one embodiment, the web application 115 may use any other generic message or data transport protocols including TCP/IP for both server-based communications and peer-to-peer (e.g., direct client to client addressing within a service 109). The interactions among the web application 115, native applications 117, the data communication platform 105, and the message routing service 119 are described in more detail with respect to FIG. 2 below.

By way of example, the communication network 107 of system 100 includes one or more networks such as a data network (not shown), a wireless network (not shown), a telephony network (not shown), or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the UE 101, a service 109 and the data communication platform 105 communicate with each other and other components of the communication network 107 using well known, new or still developing protocols. In this context, a protocol includes a set of rules defining how the network nodes within the communication network 107 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application headers (layer 5, layer 6 and layer 7) as defined by the OSI Reference Model.

In one embodiment, the web application 115 and the native applications 117 interact with the data communication platform 105, the service platform 103, the services 109a-109m, and/or the data providers 111a-111m according to a client-server model. It is noted that the client-server model of computer process interaction is widely known and used. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others.

FIG. 2 is a diagram of the components of the data communication platform 105 and a message routing service 119, according to one embodiment. By way of example, the data communication platform 105 and the message routing service 119 include one or more components for enabling addressability and communication with a web application using a communication ID. It is contemplated that the functions of these components may be combined in one or more components or performed by other components of equivalent functionality.

In this embodiment, the data communication platform 105 includes an identifier assignment module 201, a service authenticator 203, and a client device emulator 205. As shown, the data communication platform 105 interacts with the service platform 103 and/or the services 109a-109m to facilitate communications (e.g., enable addressability) with a web application 115 executing within a browser 113 on a UE 101a. More specifically, a web front end of a service 109 can serve the web application 115 to the browser 113. The browser 113 (e.g., through interaction with the web front end of the service 109 or directly) can then interact with the data communication platform 105 so that the data communication platform 105 can associate a communication ID with the web application 115 or the browser 113 to facilitate communications or addressability through a generic communication process (e.g., the message routing service 113) that is not specific to any one application or service 109.

For example, when interacting through the service 109, the web application 115 and/or browser 113 communicates with the web front end of the service 109 via, for instance, a Hypertext Transfer Protocol (HTTP), WebSockets, or other similar protocol for exchanging information between a web server and a browser. The service 109 then interacts with the data communication platform 105 associate a communication ID with the client web application 115 and/or browser session 113. For example, the identifier assignment module 201 enables the web application 115, the browser 113, and/or the web front end of the service to identify the web application 115 with, for instance, one or more application IDs, one or more user IDs, and/or one or more browser IDs (e.g., randomly generate browser IDs) to create a unique communication ID for message routing and addressability. For example, the communication ID may mediate the data exchanged between the web application 115/browser 113 and the service platform 103, the service 109, the data provider 111, and/or other UEs (e.g., UEs 101b-101n executing respective native client applications 117a-117k).

In one embodiment, to ensure that only authorized services 109 are able to communicate using various embodiments of the non-service specific processes described herein, the service authenticator 203 may request authentication from the web application 115 and/or the service 109. This authentication may include, for instance, single sign on (SSO) or other credentials to indicate that that the web application 115 and/or the service 109 has sufficient rights and/or access to associate the requested communication identifier.

In one embodiment, the identifier assignment module 201 may generate the communication ID as an IP address or otherwise associated the communication ID with IP address. As a result, communications between the web application 115 and other components of the communication network 107 can be transported using standard protocols (e.g., TCP/IP). Moreover, the client device emulator 205 can use the assigned IP address or the communication ID (e.g., if the communication ID is defined as an IP address) to effectively emulate a client device to represent the web application 115. In this way, web application 115 (e.g., through the associated IP address or client device emulation) appears as any other client over the communication network 107.

In one embodiment, after association of a communication ID with the web application 115, communications to and/or from the web application 115 can be handled by a generic communication process such as the message routing service 119. As previously described, the message routing service 119 aggregates and routes messages, data, and/or communications among multiple applications, services, clients, etc. In certain embodiments, the message routing service 119 aggregates communication data to optimize network bandwidth, resource consumption, energy consumption, and the like for related services 109 and devices (e.g., UEs 101). In one embodiment, these optimizations are performed by the message routing service 119 based on the data, messages, and other communications that are routed through the service 119.

In one embodiment, the message routing service 119 sees the web application 115 and/or the browser 113 as any other client when the web application 115 and/or the browser 113 seeks access through the web front end of the service 109. For example, all participating clients have a unique address web, wherein the unique address (e.g., the communication ID) of the web application 115 provided by the data communication platform 105.

As shown, the message routing service 119 includes at a client authenticator 207, a group handler 209, and a message dispatcher 211. The client authenticator 207 ensures that the participating clients are authenticated to engage in communications over the message routing service 119. In one embodiment, the client authenticator 207 can check authentication credentials associated with the clients (e.g., the web application 115, the native applications 117, or a combination thereof), the service 109, the service platform 103, the UEs 101, or other related component of the system 100. As previously discussed, the authentication may be facilitated by SSO credentials to reduce the number authentication credentials that are maintained by the clients.

In one embodiment, the message routing service 119 can facilitate group or multiparty communications among the web application 115, the native applications 117 (e.g., executing on different UEs 101b-101n), the service platform 103. More specifically, the group handler 209 enables any one of the clients to create a group and associated communication channels for multiparty communications. By way of example, one of the client participants (e.g., the web application 115, the native applications 117) can serve as a master of the group. In one embodiment, the master defines the group and the applicable group messaging rules for storage and enforcement at the group handler 209. For example, the group messaging rules may specify how to communicate (e.g. types of communications), what to communicate, when to communicate, what types of information (e.g., private/public data) to communicate, etc.

In one embodiment, the master can also mediate messages among group members whereby group members can send messages to the master who then determines whether to share the messages with other group members via, for instance, the message dispatcher 211 of the message routing service 119. In addition or alternatively, group members may send broadcast messages or messages to other members of the group.

By way of example, the message routing service 119 manages/controls any incoming and outgoing communications such as transfer of the files or data among clients of the services 109 based, at least in part, on the communication ID as described above. In addition, the message routing service 119 can route messages based, at least in part, on additional information that may be associated with or encoded in the communication ID including user identifiers, device identifiers, the application identifiers, browser identifiers, and the like associated with the web application 115, the browser 113, the UEs 101, the native applications 117, and other components of the services 109.

In one embodiment, the client authenticator 207 authenticates the web application 115 and/or browser 113 such that communication between the message routing service 119 and the various components and other clients of the services 109 may be enabled. In one embodiment, communications originating from the web application 115/browser 113 may include one or more recipient identifiers so that the message dispatcher 211 of the message routing service 119 can determine intended recipients. For example, the recipient identifier may mediate the data exchanged between the web application 115/browser 113 and the service platform 103, the service 109, the data provider 111, and/or other clients. In particular, the recipient identifier may be used to route the data from the service 109 to a corresponding application (e.g., another web application 115 or native application 117) in another corresponding device (e.g., the UEs 101).

In some embodiments, the message dispatcher 211 can also encrypt the communications facilitated by the message routing service 119. This encryption may include key-based encryption (e.g., via a public key infrastructure (PKI)). The key encryption keys may be shared among the components (e.g., web application 115, browser 113, native applications 117) participating in the communications. The message dispatcher 211 also provides an interface to the services 109a-109n and/or the service platform 103 (e.g., via a web front end) to receive and transmit data to the web application 115 and/or browser 113.

In another embodiment, the data communication platform 105 enables the web application 115 and/or the browser 113 to be addressed and communicate over the communication network 107 without using the message routing service 119. Instead, because addressability over the communication network 107 is provided by the communication ID, the web application 115 and/or browser 113 can communicate using any generic protocol available over the communication network 107 (e.g., TCP/IP). In this way, the web application 115 and/or browser 113 can directly address peer components (e.g., other web applications 115, native applications 117, other services 109, etc.).

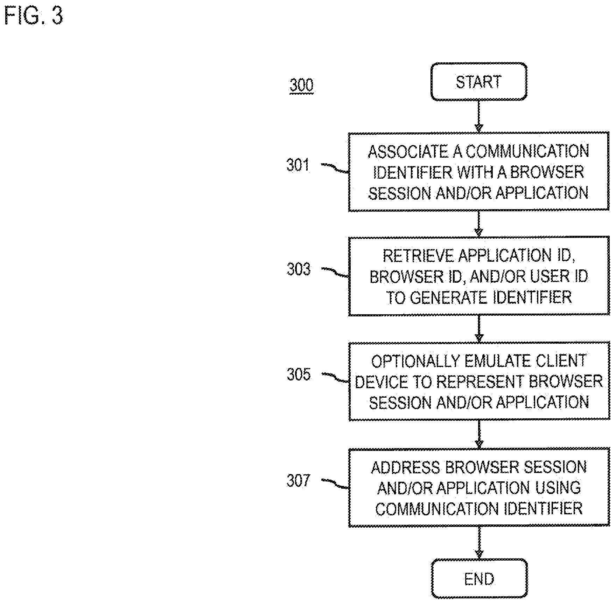

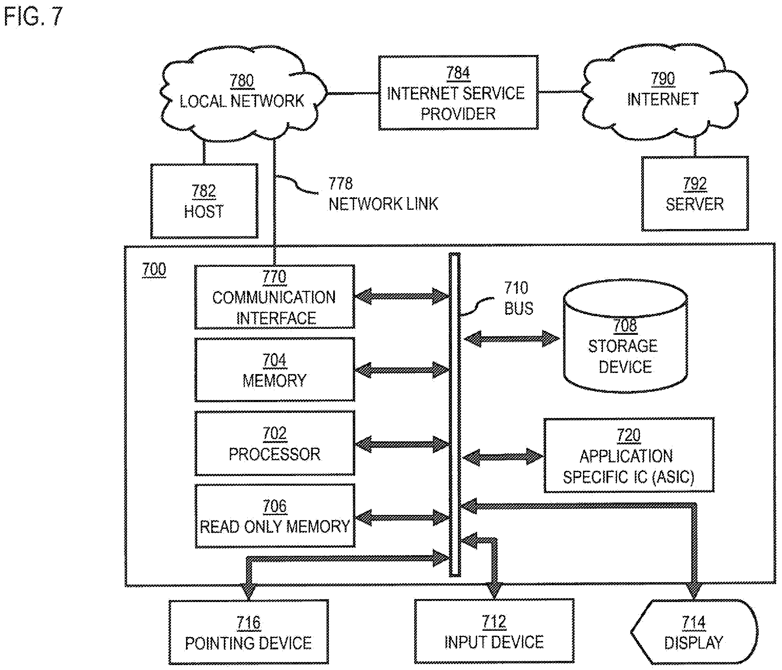

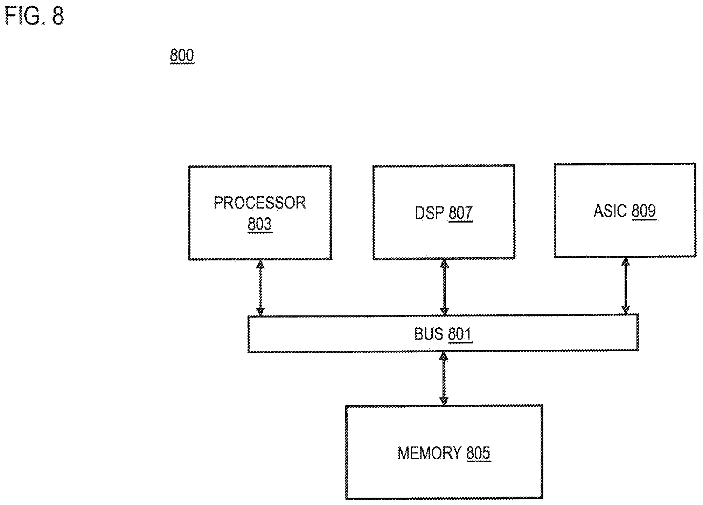

FIG. 3 is a flowchart of a process for facilitating communications for browser-based applications, according to one embodiment. In one embodiment, the data communication platform 105 performs the process 300 and is implemented in, for instance, with a computer system as shown in FIG. 7 or a chip set including a processor and a memory as shown in FIG. 8. In step 301, the data communication platform 105 determines to associate a communication ID with a browser session 113. In one embodiment, the browser session 113 hosts, at least in part, a browser or web application 115, and the communication ID facilitates addressing of the browser session 113, the web application 115, or a combination thereof via a process that is not specific to the browser session 113, the web application 115, or a combination thereof.

In step 303, the data communication platform 105 optionally retrieves and then processes and/or facilitates a processing of an application ID associated with the web application 115, a browser ID associated with the browser session 113, a user identifier, or a combination thereof to generate the communication ID or metadata associated with the communication ID. In some embodiments, the browser ID or any of the other associated IDs (e.g., the application ID, user ID, etc.) may be randomized to ensure that the resulting communication ID is sufficiently unique to the web application 115 and/or the browser 113. As previously discussed, in one embodiment, the communication ID can be an IP address to enable addressability over the communication network 107 using standard communication protocols (e.g., TCP/IP).

In one embodiment, the communication ID is determined or otherwise generated such that the application ID, the browser ID, the user ID, etc. can be derived or decoded to facilitate routing of the communication. For example, the message routing service 119 can determine the application ID, the browser ID, the user ID, and the like associated with the communication ID to identify the device (e.g., the UEs 101) and then the application within the device that is involved in a particular communication session or instance.

In another embodiment, the communication ID and/or any of the associated IDs (e.g., the application ID, browser ID, user ID, etc.) may be encrypted to protect privacy. In some embodiments, the data communication platform 105 and/or the message routing service 119 may also generate a message authentication code (e.g., a Hash-based Message Authentication Code (HMAC)) to accompany the communication ID and/or communication messages identified by the communication ID. By way of example, the encryption may be based on a symmetric cipher, such as a strong symmetric cipher (e.g., 256 bit AES) or an asymmetric cipher. In one embodiment, this encryption using the cipher may include selecting a primary key for the cipher based on the service identifiers and generating a secondary key based on a HMAC constructed from the service identifiers and predetermined parameters (e.g., service level), etc. associated with a particular service 109 of the service platform 103.

In one embodiment, the data communication platform 105 determines to cause, at least in part, emulation of a client device to represent the browser session, the web application, or a combination thereof based, at least in part, on the communication (step 305). The addressing of the browser session 113, the web application 115, or a combination thereof is performed via the emulated client device. In this way, the web application 115 (e.g., via the emulated client device) appears as any other client on the communication network 107 with respect to a corresponding service 109 or application (e.g., other web applications 115 and/or native applications 117).

In step 307, the web application 115 and/or the browser 113 is then addressed using, for instance, generic communication processes to facilitate communications between the web application 115/browser 113 and other components of the communication network 107 (e.g., other clients or servers). As discussed above, an example of a generic communication process is the message routing service 119. In one embodiment, the generic communication process may also be a peer-to-peer service wherein the clients of the service (e.g., the web application 115, browser 113, native applications 117, etc.) communicate directly using, for instance, standard peer-to-peer protocols.

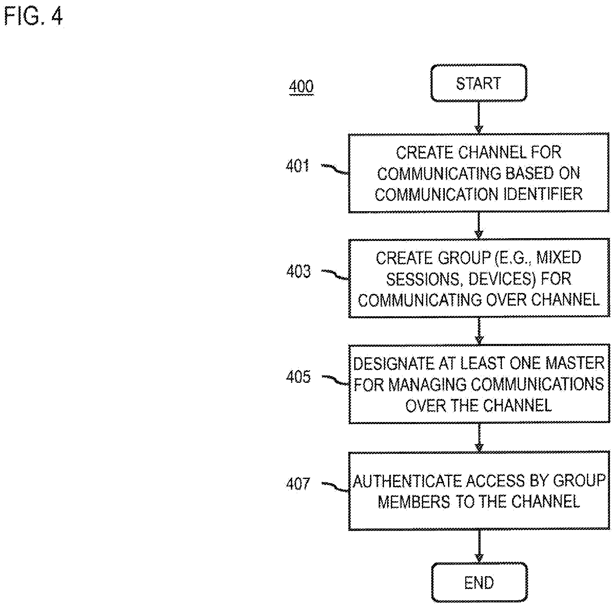

FIG. 4 is a flowchart of a process for providing browser-based group communications, according to one embodiment. In one embodiment, the data communication platform 105 performs the process 400 and is implemented in, for instance, computer system as shown in FIG. 7 or a chip set including a processor and a memory as shown in FIG. 8. In addition or alternatively, the message routing service 119 may perform all or a portion of the process 400. As shown in FIG. 4, by enabling the generic addressability of web applications 115 and or browser sessions 113, the data communication platform 105 can be used to facilitate group or multiparty communications in a mixed environment of both web applications 115 and native applications 117.

In step 401, the data communication platform 105 determines to cause, at least in part, creation of a channel for exchanging data between the browser session 113, the web application 115, or a combination thereof and one or more other browser sessions 113, one or more other web applications 115, one or more devices (e.g., UEs 101), one or more applications executing at the devices (e.g., native applications 117), or a combination thereof. This creation of the channel is based, at least in part, on the communication ID. In other words, the channel is created using the generic addressability of the communication ID so that a specialized server specific to the web application 115 involved in the multiparty communication is not needed. For example, the group handler 209 of the message routing service 119 which can support group communications generally for any of the services 109 can use the communication ID to properly route and address the communications to and from the participating web applications 115.

The data communication platform 105 and/or the message routing service 119 then determines to cause, at least in part, creation of a group of the participating components including the browser session 113, the web application 115, the one or more other browser sessions 113, the one or more other web applications 115, the one or more devices (e.g., UEs 101), the one or more applications executing at the devices (e.g., native applications 117), or a combination thereof (step 403). For example, the founding member of the group may send invitations to the other components to join and participate in the group. It is contemplated that the group may be formed to support any multiparty communication purposes including, e.g., group gaming, group collaboration, group data sharing, etc.

Optionally, the data communication platform 105 and/or the message routing service 119 determine to designate at least one master from among the group members. In one embodiment, the at least one master manages data exchanges and/or communications among the group over the channel (step 405).

In step 407, before initiation of group or multiparty communications, the data communication platform 105 and/or the message routing service 119 determines to authenticate access to the channel. By way of example, the authentication may be performed using SSO authentication credentials as described previously. It is also contemplated that any authentication process for ensuring that only authorized devices and/or users can participate in the multiparty communications may be used.

The processes shown in FIGs. 3 and 4 are advantageous in that these processes provide an efficient way to facilitate communications involving web applications 115 and/or browser sessions 113 by, for instance, reducing the resource burdens (e.g., computing resources, bandwidth resources, energy resources, etc.) associated with maintaining a specialized or service-specific server to support addressability of the web applications 115/browsers 113. The data communication platform 105 is a means for achieving this advantage.

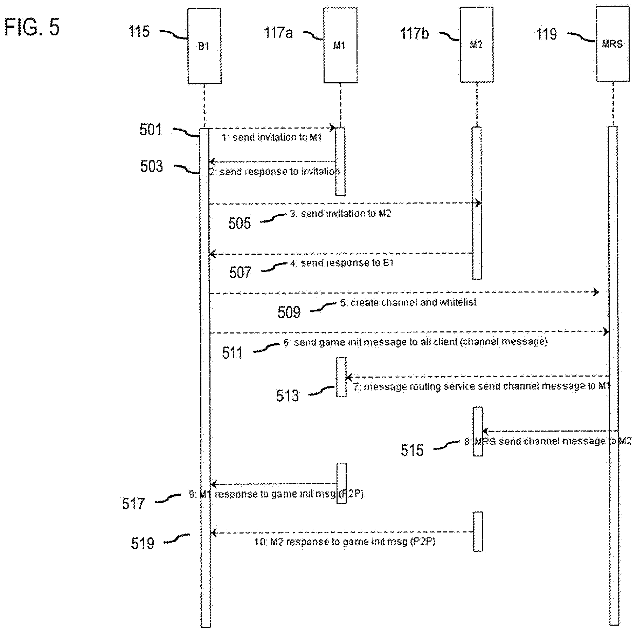

FIG. 5 is a ladder diagram that illustrates a sequence of messages and processes used for facilitating browser-based group communications, according to one embodiment. More specifically, FIG. 5 illustrates a process for using the processes of FIGs. 3 and 4 to support multiparty communications for initiating and conducting a multiparty gamming session in a mixed environment of both browser-based web applications 115 and mobile devices (e.g., UEs 101) executing native applications 117.

The processes represented in FIG. 5 are a web application 115 (B1), a first native application 117a executing on a mobile device (M1), a second native application 117b executing on a mobile device (M2), and a message routing service 119 (MRS). In this example, the web application 115 and the native applications 117a and 117b are interacting to provide a multiparty gaming service with using a server specific to the gaming service for multiparty communications. In one embodiment, it is contemplated that the web application 115 is hosted or executed on, for instance, a web-enabled television or other central device supporting a large community display. Moreover, it is assumed that the web-application 115 has already been associated with a communication ID (e.g., via the processes described above) to enable communications via the message routing service 119 (e.g., a generic communication process that is not specific to the web applications and/or the native applications 117). In addition, the native applications 117 are executed on mobile devices with individual displays that are directly accessible via conventional approaches.

In step 502, the web application 115 (B1) is acting as a master of a group or multiparty game session and sends an invitation to the native application 117a on the first mobile device (M1) to join the multiparty game session. In one embodiment, the invitation may be send as a peer-to-peer (P2P) message directly to native application 117a for presentation in the application 117a's user interface. The direct message may be addressed and/or routed using the communication ID associated with the web application 115. In addition or alternatively, the invitation may be sent via an alternate mode of communication such as e-mail or text messaging. At step 503, the native application 117a sends a response message directed to the web application 115. Similarly, the response message may be addressed via the associated communication ID of the web application 115 or transmitted using an alternate mode of communication.

At step 505, the web application 115 also sends an invitation to join the multiparty session to the native application 117b executing on the second mobile device (M2). The native application 117b may provide response message to the web application 115 in the same way as described with respect to the native application 117a (step 507).

On receiving the responses to the invitations, the web application 115 creates a communication channel and specifies a "whitelist" of nodes (e.g., the native applications 117a and 117b) that have accepted the invitation and want to participate in the multiparty session (step 509). The channel and whitelist are sent to the message routing service 119 (MRS) so that the group information (e.g., the whitelist) can be used to identify and route messages to group members. In one embodiment, the channel represents a communication path between the web application 115 and the native applications 117a and 117b facilitated by the message routing service 119 (e.g., via the group handler 209 of the message routing service 119). For example, messages directed to the channel can be routed to one or more of the group participants.

To initiate the multiparty gaming session, the web application 115 then sends a game initialization message (init message) as a channel message to the message routing service 119 for broadcast to the group members (e.g., the native applications 117a and 117b) (step 511). In response, the message routing service 119 routes the init message to the participating native application 117a (step 513) and the participating native application 117b (step 515).

On receiving the init message, the native application 117a sends a confirmation or other response to the init message directly to the web application 115 (step 517). In this case, because the init message response need only be sent to the master (e.g., the web application 115), the native application 117a can send the response as a direct P2P message rather than a channel message that is routed through the message routing service 119. Similarly, the native application 117b can send its response to the init message to the web application 115 (step 519). Based, on the responses, the web application 115 can determine to, for instance, commence the multiparty session.

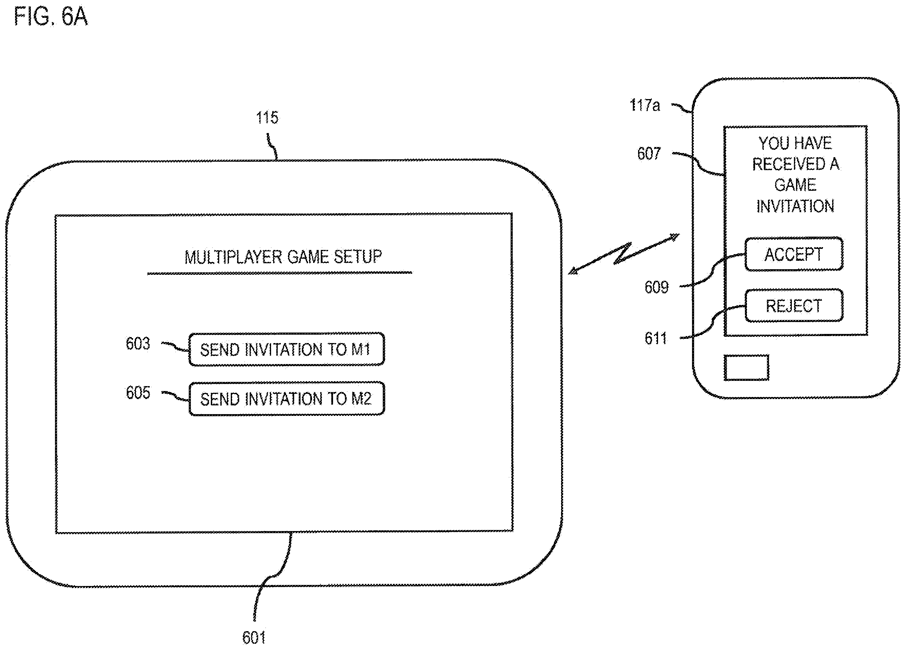

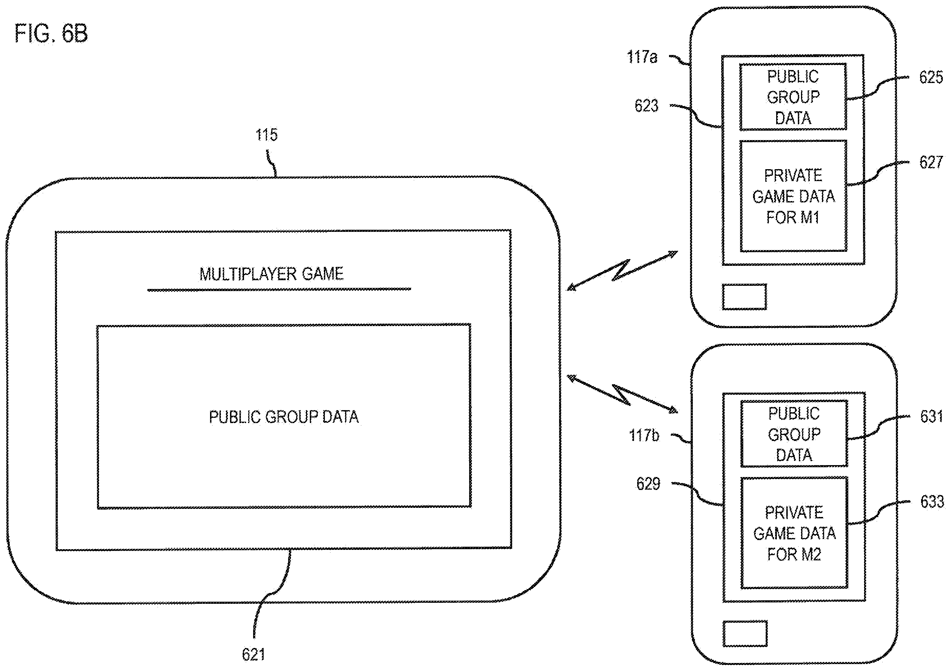

FIGs. 6A and 6B are diagrams of user interfaces used in the processes of FIGs. 3-5 for facilitating browser-based group communications including private and public data, according to various embodiments. As described above, the system 100 can be used to facilitate multiparty communications and sessions. In one embodiment, the multiparty session can support group gaming in, for instance, a communal environment (e.g., a living room environment). For example, the game may be a board game with the board displayed in a television set equipped with a browser engine. As shown in FIG. 6A, the game is hosted in the browser engine of the television as a web application 115. More specifically, FIG. 6A displays a user interface (UI) 601 of the web application 115 for setting up the multiplayer game session. As part of this setup process, the UI 601 presents options 603 and 605 to send invitation to the join the group gaming session to mobile devices M1 and M2 respectively.

By selecting the option 603 to send an invitation to, for instance, the mobile device M1, the web application 115 generates and transmits the invitation. This invitation is received a native application 117a that is a client of the game session. Alternatively, it is contemplated that instead of the native application 117a the invited mobile device can execute another instance of the web application 115 in a browser application. In other words, all participants (including the master) can be either native or browser based. If browser-based, the system 100 provides for and enables universal addressability of the browser or corresponding web application 115 without need for specialized or service-specific servers to route communications to the web application 115. On receiving the invitation, the native application 117a presents a UI 609 to alert the user of the device that a game invitation has been received. The UI 609 also provides options 609 and 611 to respectively accept or reject the invitation.

If one or more of the invitations are accepted, the web application 115 can initialize or commence the gaming session. As shown in FIG. 6B, on commencing the gaming session, the web application 115 displays a UI 621 that presents public group data. For example, if the gaming session is providing a group board game, the public group data may comprise a representation of the game board. In another example, if the game is a card game, the public group data may display the public or community cards. If the master is a browser-equipped television, the public data can be displayed on the television. It is contemplated that the master can also be designated a master of the group. In this case, sharing of the view might be restricted to the small screen of the mobile device or provide over the devices video output (e.g., a composite video output, an HDMI video output, or other video interface).

In one embodiment, if a master drops out of the session, another participant may be designated as the new master. The transition from the dropped master to the master can be managed by any one of the participating applications (e.g., other web applications 115 or native applications 117). In some embodiments, multiple masters can be designated in one multiparty session to facilitate, for instance, formation of multiple teams for competing or use during the session.

At the same time, the web application 115 (e.g., as the designated master) can transmit private data to the participating native applications 117a and 117b (or other participating web applications 115) for display in their respective UIs to preserve their privacy. For example, the application 117a of the mobile device M1 can display a UI 623 that can include a public data portion 625 and a private game data portion 627. The public data portion 625 can provide another view or a personalized view of the public data. For example, the public data portion 625 may display a portion of the game board that may be of particular interest to the user of the mobile device M1. The private game data portion 627 may display games pieces that are specific to the user that need not or is not to be displayed to all members. For example, in a card game, the private data portion 627 may display the cards that the user of the mobile device M1 is holding. Similarly, the application 117b of another participating mobile device M2 may display its respective public data portion 631 and private game data 633.

The processes described herein for facilitating communications for browser-based applications may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

FIG. 7 illustrates a computer system 700 upon which an embodiment of the invention may be implemented. Although computer system 700 is depicted with respect to a particular device or equipment, it is contemplated that other devices or equipment (e.g., network elements, servers, etc.) within FIG. 7 can deploy the illustrated hardware and components of system 700. Computer system 700 is programmed (e.g., via computer program code or instructions) to facilitate communications for browser-based applications as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 700, or a portion thereof, constitutes a means for performing one or more steps of facilitating communications for browser-based applications.

A bus 710 includes one or more parallel conductors of information so that information is transferred quickly among devices coupled to the bus 710. One or more processors 702 for processing information are coupled with the bus 710.

A processor (or multiple processors) 702 performs a set of operations on information as specified by computer program code related to facilitating communications for browser-based applications. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or any other dynamic storage device, stores information including processor instructions for facilitating communications for browser-based applications. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or any other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for facilitating communications for browser-based applications, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT), a liquid crystal display (LCD), a light emitting diode (LED) display, an organic LED (OLED) display, a plasma screen, or a printer for presenting text or images, and a pointing device 716, such as a mouse, a trackball, cursor direction keys, or a motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of ASICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for facilitating communications for browser-based applications.

The term "computer-readable medium" as used herein refers to any medium that participates in providing information to processor 702, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 708. Volatile media include, for example, dynamic memory 704. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 720.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system 700 can be deployed in various configurations within other computer systems, e.g., host 782 and server 792.

At least some embodiments of the invention are related to the use of computer system 700 for implementing some or all of the techniques described herein. According to one embodiment of the invention, those techniques are performed by computer system 700 in response to processor 702 executing one or more sequences of one or more processor instructions contained in memory 704. Such instructions, also called computer instructions, software and program code, may be read into memory 704 from another computer-readable medium such as storage device 708 or network link 778. Execution of the sequences of instructions contained in memory 704 causes processor 702 to perform one or more of the method steps described herein. In alternative embodiments, hardware, such as ASIC 720, may be used in place of or in combination with software to implement the invention. Thus, embodiments of the invention are not limited to any specific combination of hardware and software, unless otherwise explicitly stated herein.

The signals transmitted over network link 778 and other networks through communications interface 770, carry information to and from computer system 700. Computer system 700 can send and receive information, including program code, through the networks 780, 790 among others, through network link 778 and communications interface 770. In an example using the Internet 790, a server host 792 transmits program code for a particular application, requested by a message sent from computer 700, through Internet 790, ISP equipment 784, local network 780 and communications interface 770. The received code may be executed by processor 702 as it is received, or may be stored in memory 704 or in storage device 708 or any other non-volatile storage for later execution, or both. In this manner, computer system 700 may obtain application program code in the form of signals on a carrier wave.

Various forms of computer readable media may be involved in carrying one or more sequence of instructions or data or both to processor 702 for execution. For example, instructions and data may initially be carried on a magnetic disk of a remote computer such as host 782. The remote computer loads the instructions and data into its dynamic memory and sends the instructions and data over a telephone line using a modem. A modem local to the computer system 700 receives the instructions and data on a telephone line and uses an infra-red transmitter to convert the instructions and data to a signal on an infra-red carrier wave serving as the network link 778. An infrared detector serving as communications interface 770 receives the instructions and data carried in the infrared signal and places information representing the instructions and data onto bus 710. Bus 710 carries the information to memory 704 from which processor 702 retrieves and executes the instructions using some of the data sent with the instructions. The instructions and data received in memory 704 may optionally be stored on storage device 708, either before or after execution by the processor 702.

FIG. 8 illustrates a chip set or chip 800 upon which an embodiment of the invention may be implemented. Chip set 800 is programmed to facilitate communications for browser-based applications as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 800 can be implemented in a single chip. It is further contemplated that in certain embodiments the chip set or chip 800 can be implemented as a single "system on a chip." It is further contemplated that in certain embodiments a separate ASIC would not be used, for example, and that all relevant functions as disclosed herein would be performed by a processor or processors. Chip set or chip 800, or a portion thereof, constitutes a means for performing one or more steps of providing user interface navigation information associated with the availability of functions. Chip set or chip 800, or a portion thereof, constitutes a means for performing one or more steps of facilitating communications for browser-based applications.

In one embodiment, the chip set or chip 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 800 includes merely one or more processors and some software and/or firmware supporting and/or relating to and/or for the one or more processors.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to facilitate communications for browser-based applications. The memory 805 also stores the data associated with or generated by the execution of the inventive steps.

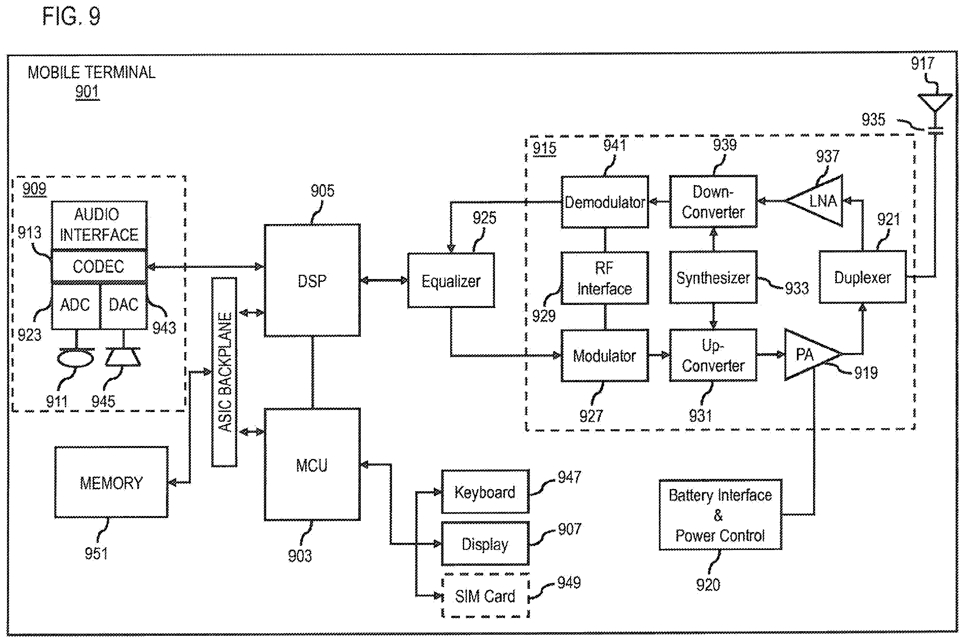

FIG. 9 is a diagram of exemplary components of a mobile terminal (e.g., handset) for communications, which is capable of operating in the system of FIG. 1, according to one embodiment. In some embodiments, mobile terminal 901, or a portion thereof, constitutes a means for performing one or more steps of facilitating communications for browser-based applications. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile terminal functions that perform or support the steps of facilitating communications for browser-based applications. The display 907 includes display circuitry configured to display at least a portion of a user interface of the mobile terminal (e.g., mobile telephone). Additionally, the display 907 and display circuitry are configured to facilitate user control of at least some functions of the mobile terminal. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile terminal 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903 which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile terminal 901 to facilitate communications for browser-based applications. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the terminal. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile terminal 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable storage medium known in the art. The memory device 951 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 949 carries, for instance, important information, such as the cellular phone number, the carrier supplying service, subscription details, and security information. The SIM card 949 serves primarily to identify the mobile terminal 901 on a radio network. The card 949 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
determining to associate a communication identifier with a browser session (113),
wherein the browser session (113) hosts, at least in part, a web application (115), and
wherein the communication identifier facilitates addressing of the browser session (113), the web application (115), or a combination thereof via a process that is not specific to the browser session (113), the web application (115), or a combination thereof;
determining to cause, at least in part, creation of a channel for exchanging data between the browser session (113), the web application (115), or a combination thereof and one or more other browser sessions, one or more other web applications, one or more devices, or a combination thereof,
wherein the creation of the channel is based, at least in part, on the communication identifier;
determining to cause, at least in part, creation of a group of the browser session (113), the web application (115), the one or more other browser sessions, the one or more other web applications, the one or more devices, or a combination thereof; and determining to designate at least one master from among the group,
wherein the at least one master manages data exchanges among the group over the channel.

2. A method of claim 1, further comprising:
processing and/or facilitating a processing of an application identifier associated with the web application (115), a browser identifier associated with the browser session (113), a user identifier, or a combination thereof to generate the communication identifier or metadata associated with the communication identifier.

3. A method according to any of claims 1 and 2, wherein the communication identifier is an Internet Protocol address.

4. A method according to any of claims 1 to 3, wherein the process includes, at least in part, a message routing service, a peer-to-peer service, or a combination thereof.

5. A method according to any of claims 1 to 4, further comprising:
determining to cause, at least in part, emulation of a client device to represent the browser session (113), the web application (115), or a combination thereof based, at least in part, on a communication,
wherein the addressing of the browser session, the web application, or a combination thereof is via the emulated client device.

6. A method according to claim 1, wherein the data exchanged over the channel includes at least in part data private to a subset of the group, data public to the group, or a combination thereof.

7. A method according to any of claims 1 or 6, further comprising: determining to authenticate access to the channel.

8. A method according to any of claims 1 or 7, wherein the determination to assign a communication identifier to a browser session is performed at a client-side.

9. An apparatus comprising means configured to cause the apparatus to at least perform:
determining to associate a communication identifier with a browser session,
wherein the browser session hosts, at least in part, a web application, and
wherein the communication identifier facilitates addressing of the browser session, the web application, or a combination thereof via a process that is not specific to the browser session, the web application, or a combination thereof;
determining to cause, at least in part, creation of a channel for exchanging data between the browser session, the web application, or a combination thereof and one or more other browser sessions, one or more other web applications, one or more devices, or a combination thereof,
wherein the creation of the channel is based, at least in part, on the communication identifier;
determining to cause, at least in part, creation of a group of the browser session, the web application, the one or more other browser sessions, the one or more other web applications, the one or more devices, or a combination thereof; and
determining to designate at least one master from among the group,
wherein the at least one master manages data exchanges among the group over the channel.

10. The apparatus according to claim 9, further comprising means configured to cause the apparatus to at least perform the method according to any of claims 2 to 8.

11. A mobile terminal (901) comprising the apparatus of claim 9 or 10.

12. A computer program which, when executed by one or more processors, is configured to cause an apparatus to perform:
determining to associate a communication identifier with a browser session,
wherein the browser session hosts, at least in part, a web application, and
wherein the communication identifier facilitates addressing of the browser session, the web application, or a combination thereof via a process that is not specific to the browser session, the web application, or a combination thereof;
determining to cause, at least in part, creation of a channel for exchanging data between the browser session, the web application, or a combination thereof and one or more other browser sessions, one or more other web applications, one or more devices, or a combination thereof,
wherein the creation of the channel is based, at least in part, on the communication identifier;
determining to cause, at least in part, creation of a group of the browser session, the web application, the one or more other browser sessions, the one or more other web applications, the one or more devices, or a combination thereof; and determining to designate at least one master from among the group,
wherein the at least one master manages data exchanges among the group over the channel.

13. The computer program according to claim 12 which, when executed by the one or more processors, is configured to cause the apparatus to perform a method according to any of claims 2 to 8.

## Patentansprüche

1. Verfahren, umfassend:
Bestimmen, um eine Kommunikationskennung einer Browsersitzung (113) zuzuordnen,
wobei die Browsersitzung (113) zumindest teilweise eine Webanwendung (115) hostet, und
wobei die Kommunikationskennung das Adressieren der Browsersitzung (113), der Webanwendung (115) oder einer Kombination davon über einen Prozess ermöglicht, der nicht spezifisch für die Browsersitzung (113), die Webanwendung (115) oder eine Kombination davon ist;
Bestimmen, um zumindest teilweise die Schaffung eines Kanals für den Datenaustausch zwischen der Browsersitzung (113), der Webanwendung (115) oder einer Kombination davon und einer oder mehreren anderen Browsersitzungen, einer oder mehreren anderen Webanwendungen, eine oder mehrere Geräte oder einer Kombination davon zu veranlassen,
wobei die Schaffung des Kanals zumindest teilweise auf der Kommunikationskennung basiert;
Bestimmen, um zumindest teilweise die Schaffung einer Gruppe der Browsersitzung (113), der Webanwendung (115), der einen oder mehreren anderen Browsersitzungen, der einen oder mehreren anderen Webanwendungen, der einen oder mehreren Geräte oder einer Kombination davon zu veranlassen; und
Bestimmen, zumindest einen Master aus der Gruppe zu bezeichnen,
wobei der zumindest eine Master den Datenaustausch zwischen der Gruppe über den Kanal verwaltet.

2. Verfahren nach Anspruch 1, ferner umfassend:
Verarbeiten und/oder Ermöglichen einer Verarbeitung einer der Webanwendung (115) zugeordneten Anwendungskennung, einer der Browsersitzung (113) zugeordneten Browserkennung, einer Benutzerkennung oder einer Kombination davon, um die Kommunikationskennung oder Metadaten zu erzeugen, die der Kommunikationskennung zugeordnet sind.

3. Verfahren nach einem der Ansprüche 1 und 2, wobei die Kommunikationskennung eine Internet-Protokoll-Adresse ist.

4. Verfahren nach einem der Ansprüche 1 bis 3, wobei das Verfahren zumindest teilweise einen Nachrichtenroutingdienst, einen Peer-to-Peer-Dienst oder eine Kombination davon beinhaltet.

5. Verfahren nach einem der Ansprüche 1 bis 4, ferner umfassend:
Bestimmen, zumindest teilweise eine Emulation eines Client-Gerätes zum Darstellen der Browsersitzung (113), der Webanwendung (115) oder einer Kombination davon basierend, zumindest teilweise, auf einer Kommunikation zu veranlassen,
wobei das Adressieren der Browsersitzung, der Webanwendung oder einer Kombination davon über das emulierte Client-Gerät erfolgt.

6. Verfahren nach Anspruch 1, worin die über den Kanal ausgetauschten Daten zumindest teilweise Daten beinhalten, die für eine Teilmenge der Gruppe private, für die Gruppe öffentliche Daten oder eine Kombination davon sind.

7. Verfahren nach einem der Ansprüche 1 oder 6, ferner umfassend: Bestimmen, um den Zugriff auf den Kanal zu authentifizieren.

8. Verfahren nach einem der Ansprüche 1 oder 7, wobei das Bestimmen der Zuordnung einer Kommunikationskennung zu einer Browsersitzung auf einer Clientseite durchgeführt wird.

9. Vorrichtung umfassend Mittel, die dazu ausgelegt sind, die Vorrichtung zu veranlassen, zumindest durchzuführen:
Bestimmen, um eine Kommunikationskennung einer Browsersitzung zuzuordnen,
wobei die Browsersitzung zumindest teilweise eine Webanwendung hostet, und
wobei die Kommunikationskennung das Adressieren der Browsersitzung, der Webanwendung oder einer Kombination davon über einen Prozess ermöglicht, der nicht spezifisch für die Browsersitzung, die Webanwendung oder eine Kombination davon ist;
Bestimmen, um zumindest teilweise die Schaffung eines Kanals für den Datenaustausch zwischen der Browsersitzung, der Webanwendung oder einer Kombination davon und einer oder mehreren anderen Browsersitzungen, einer oder mehreren anderen Webanwendungen, eines oder mehrerer Geräte oder einer Kombination davon zu veranlassen,
wobei die Schaffung des Kanals zumindest teilweise auf der Kommunikationskennung basiert;
Bestimmen, um zumindest teilweise die Schaffung einer Gruppe der Browsersitzung, der Webanwendung, der einen oder mehreren anderen Browsersitzungen, der einen oder mehreren anderen Webanwendungen, der einen oder mehreren Geräte oder einer Kombination davon zu veranlassen; und
Bestimmen, zumindest einen Master aus der Gruppe zu bezeichnen,
wobei der zumindest eine Master den Datenaustausch zwischen der Gruppe über den Kanal verwaltet.

10. Vorrichtung nach Anspruch 9, ferner umfassend Mittel, die dazu ausgelegt sind, die Vorrichtung zu veranlassen, zumindest das Verfahren nach einem der Ansprüche 2 bis 8 durchzuführen.

11. Mobiles Endgerät (901), umfassend die Vorrichtung nach Anspruch 9 oder 10.

12. Computerprogramm, das, wenn es von einem oder mehreren Prozessoren ausgeführt wird, dazu ausgelegt ist, eine Vorrichtung zu veranlassen, folgendes durchzuführen:
Bestimmen, um eine Kommunikationskennung einer Browsersitzung zuzuordnen,
wobei die Browsersitzung zumindest teilweise eine Webanwendung hostet, und
wobei die Kommunikationskennung das Adressieren der Browsersitzung, der Webanwendung oder einer Kombination davon über einen Prozess ermöglicht, der nicht spezifisch für die Browsersitzung, die Webanwendung oder eine Kombination davon ist;
Bestimmen, um zumindest teilweise die Schaffung eines Kanals für den Datenaustausch zwischen der Browsersitzung, der Webanwendung oder einer Kombination davon und einer oder mehreren anderen Browsersitzungen, einer oder mehreren anderen Webanwendungen, eines oder mehrerer Geräte oder einer Kombination davon zu veranlassen,
wobei die Schaffung des Kanals zumindest teilweise auf der Kommunikationskennung basiert;
Bestimmen, um zumindest teilweise die Schaffung einer Gruppe der Browsersitzung, der Webanwendung, der einen oder mehreren anderen Browsersitzungen, der einen oder mehreren anderen Webanwendungen, der einen oder mehreren Geräte oder einer Kombination davon zu veranlassen; und
Bestimmen, zumindest einen Master aus der Gruppe zu bezeichnen,
wobei der zumindest eine Master den Datenaustausch zwischen der Gruppe über den Kanal verwaltet.

13. Computerprogramm nach Anspruch 12, das, wenn es von einem oder mehreren Prozessoren ausgeführt wird, dazu ausgelegt ist, die Vorrichtung zu veranlassen, ein Verfahren nach einem der Ansprüche 2 bis 8 durchzuführen.

## Revendications

1. Procédé, comprenant:
une détermination pour associer un identifiant de communication à une session de navigateur (113),
dans lequel la session de navigateur (113) héberge, au moins en partie, une application web (115), et
dans lequel l'identifiant de communication facilite l'adressage de la session de navigateur (113), de l'application web (115) ou d'une combinaison de celles-ci par l'intermédiaire d'un processus qui n'est pas spécifique à la session de navigateur (113), à l'application web (115) ou à une combinaison de celles-ci;
une détermination pour entraîner, au moins en partie, la création d'un canal pour échanger des données entre la session de navigateur (113), l'application web (115) ou une combinaison de celles-ci et une ou plusieurs autre(s) session(s) de navigateur, une ou plusieurs autre(s) application(s) web, un ou plusieurs dispositifs(s), ou une combinaison de ceux-ci,
dans lequel la création du canal est basée, au moins en partie, sur l'identifiant de communication ;
une détermination pour entraîner, au moins en partie, la création d'un groupe de la session de navigateur (113), de l'application web (115), de ladite/desdites une ou plusieurs autre(s) session(s) de navigateur, de ladite/desdites une ou plusieurs autre(s) application(s) web, dudit/desdits un ou plusieurs dispositif(s), ou d'une combinaison de ceux-ci; et
une détermination pour désigner au moins un maître parmi le groupe,
dans lequel ledit au moins un maître gère des échanges de données parmi le groupe sur le canal.

2. Procédé selon la revendication 1, comprenant en outre le traitement et/ou la facilitation d'un traitement d'un identifiant d'application associé à l'application web (115), d'un identifiant de navigateur associé à la session de navigateur (113), d'un identifiant d'utilisateur ou d'une combinaison de ceux-ci afin de générer l'identifiant de communication ou des métadonnées associées à l'identifiant de communication.

3. Procédé selon l'une quelconque des revendications 1 et 2, dans lequel l'identifiant de communication est une adresse de Protocole Internet.

4. Procédé selon l'une quelconque des revendications 1 à 3, dans lequel le processus comprend, au moins en partie, un service de routage de messages, un service de poste à poste ou une combinaison de ceux-ci.

5. Procédé selon l'une quelconque des revendications 1 à 4, comprenant en outre:
une détermination pour entraîner, au moins en partie, une émulation d'un dispositif client pour représenter la session de navigateur (113), l'application web (115) ou une combinaison de celles-ci sur la base, au moins en partie, d'une communication,
dans lequel l'adressage de la session de navigateur de l'application web ou d'une combinaison de celles-ci est réalisé par l'intermédiaire du dispositif client émulé.

6. Procédé selon la revendication 1, dans lequel les données échangées sur le canal comprennent au moins en partie des données privées pour un sous-ensemble du groupe, des données publiques au groupe, ou une combinaison de celles-ci.

7. Procédé selon l'une quelconque des revendications 1 à 6, comprenant en outre une détermination pour authentifier un accès au canal.

8. Procédé selon l'une quelconque des revendications 1 à 7, dans lequel la détermination pour attribuer un identifiant de communication à une session de navigateur est exécutée du côté client.

9. Appareil comprenant des moyens configurés de manière à amener l'appareil à exécuter au moins:
une détermination pour associer un identifiant de communication à une session de navigateur,
dans lequel la session de navigateur héberge, au moins en partie, une application web, et
dans lequel l'identifiant de communication facilite l'adressage de la session de navigateur, de l'application web ou d'une combinaison de celles-ci par l'intermédiaire d'un processus qui n'est pas spécifique à la session de navigateur, à l'application web ou à une combinaison de celles-ci;
une détermination pour entraîner, au moins en partie, la création d'un canal pour échanger des données entre la session de navigateur, l'application web ou une combinaison de celles-ci et une ou plusieurs autre(s) session(s) de navigateur, une ou plusieurs autre(s) application(s) web, un ou plusieurs dispositifs(s), ou une combinaison de ceux-ci,
dans lequel la création du canal est basée, au moins en partie, sur l'identifiant de communication ;
une détermination pour entraîner, au moins en partie, la création d'un groupe de la session de navigateur de l'application web, de ladite/desdites une ou plusieurs autre(s) session(s) de navigateur, de ladite/desdites une ou plusieurs autre(s) application(s) web, dudit/desdits un ou plusieurs dispositif(s), ou d'une combinaison de ceux-ci; et
une détermination pour désigner au moins un maître parmi le groupe,
dans lequel ledit au moins un maître gère des échanges de données parmi le groupe sur le canal.

10. Appareil selon la revendication 9, comprenant en outre des moyens configurés de manière à amener l'appareil à exécuter au moins le procédé selon l'une quelconque des revendications 2 à 8.

11. Terminal mobile (901) comprenant l'appareil selon la revendication 9 ou 10.

12. Programme informatique qui, lorsqu'il est exécuté par un ou plusieurs processeur(s), est configuré de manière à amener un appareil à exécuter:
une détermination pour associer un identifiant de communication à une session de navigateur,
dans lequel la session de navigateur héberge, au moins en partie, une application web, et
dans lequel l'identifiant de communication facilite l'adressage de la session de navigateur, de l'application web ou d'une combinaison de celles-ci par l'intermédiaire d'un processus qui n'est pas spécifique à la session de navigateur, à l'application web ou à une combinaison de celles-ci;
une détermination pour entraîner, au moins en partie, la création d'un canal pour échanger des données entre la session de navigateur, l'application web ou une combinaison de celles-ci et une ou plusieurs autre(s) session(s) de navigateur, une ou plusieurs autre(s) application(s) web, un ou plusieurs dispositifs(s), ou une combinaison de ceux-ci,
dans lequel la création du canal est basée, au moins en partie, sur l'identifiant de communication ;
une détermination pour entraîner, au moins en partie, la création d'un groupe de la session de navigateur de l'application web, de ladite/desdites une ou plusieurs autre(s) session(s) de navigateur, de ladite/desdites une ou plusieurs autre(s) application(s) web, dudit/desdits un ou plusieurs dispositif(s), ou d'une combinaison de ceux-ci; et
une détermination pour désigner au moins un maître parmi le groupe,
dans lequel ledit au moins un maître gère des échanges de données parmi le groupe sur le canal.

13. Programme informatique selon la revendication 12, qui, lorsqu'il est exécuté par ledit/lesdits un ou plusieurs processeur(s), est configuré de manière à amener l'appareil à exécuter un procédé selon l'une quelconque des revendications 2 à 8.
